(19) Europäisches Patentamt

European Patent Office

Office européen des brevets

(11) **EP 4 034 962 B1**

(12) # EUROPEAN PATENT SPECIFICATION

(45) Date of publication and mention
of the grant of the patent:
**06.05.2026 Bulletin 2026/19**

(21) Application number: **20869846.4**

(22) Date of filing: **25.09.2020**

(51) International Patent Classification (IPC):
*G06T 7/292* (2017.01)

(52) Cooperative Patent Classification (CPC):
**G06F 16/906; G06N 7/01; G06N 20/00;
G06T 7/292; G09B 19/0038;** G06N 3/006;
G06T 2207/10016; G06T 2207/20076;
G06T 2207/30228

(86) International application number:
**PCT/US2020/052854**

(87) International publication number:
**WO 2021/062249 (01.04.2021 Gazette 2021/13)**

(54) **SYSTEM AND METHOD FOR IMPROVED STRUCTURAL DISCOVERY AND REPRESENTATION LEARNING OF MULTI-AGENT DATA**

SYSTEM UND VERFAHREN ZUR VERBESSERTEN ENTDECKUNG VON STRUKTUREN UND ZUM LERNEN DER DARSTELLUNG VON MULTI-AGENTEN-DATEN

SYSTÈME ET PROCÉDÉ POUR UNE DÉCOUVERTE STRUCTURALE AMÉLIORÉE ET UN APPRENTISSAGE DE REPRÉSENTATION DE DONNÉES D'AGENTS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2019 US 201962907133 P**

(43) Date of publication of application:
**03.08.2022 Bulletin 2022/31**

(73) Proprietor: **STATS LLC
Chicago, IL 60601 (US)**

(72) Inventors:
• **HOBBS, Jennifer
Chicago, IL 60601 (US)**
• **LUCEY, Patrick
Chicago, IL 60601 (US)**

(74) Representative: **Patel, Nikesh et al
Venner Shipley LLP
200 Aldersgate
London EC1A 4HD (GB)**

(56) References cited:
**US-A1- 2016 346 614      US-A1- 2018 032 858
US-A1- 2019 070 512      US-A1- 2019 089 923**

• **WEI XINYU FELIX: "Modelling and Predicting Adversarial Behaviour using Large Amounts of Spatiotemporal Data", THESIS PHD QUEENSLAND UNIVERSITY OF TECHNOLOGY, 1 January 2016 (2016-01-01), XP093083474, Retrieved from the Internet <URL:https://eprints. qut.edu.au/101959/1/Xinyu_Wei_Thesis.pdf> [retrieved on 20230919]**
• **WHITAKER GAVIN A. ET AL: "Visualizing a Team's Goal Chances in Soccer from Attacking Events: A Bayesian Inference Approach", BIG DATA, vol. 6, no. 4, 1 December 2018 (2018-12-01), pages 271 - 290, XP093083462, ISSN: 2167-6461, DOI: 10.1089/big.2018.0071**
• **MANAFIFARD M ET AL: "A survey on player tracking in soccer videos", COMPUTER VISION AND IMAGE UNDERSTANDING, ACADEMIC PRESS, US, vol. 159, 4 February 2017 (2017-02-04), pages 19 - 46, XP085059006, ISSN: 1077-3142, DOI: 10.1016/J.CVIU.2017.02.002**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

EP 4 034 962 B1

• **HOBBS JENNIFER ET AL: "IMPROVED STRUCTURAL DISCOVERY AND REPRESENTATION LEARNING OF MULTI-AGENT DATA", 1 January 2020 (2020-01-01), XP055953028, Retrieved from the Internet <URL:https://arxiv.org/pdf/1912.13107.pdf> [retrieved on 20220819]**

## Description

### Cross-Reference to Related Applications

This application claims priority to U.S. Application Serial No. 62/907,133, filed September 27, 2019.

### Field of the Disclosure

The present disclosure generally relates to a system, non-transitory computer readable medium, and method for learning player distribution and role assignments in sports.

### Background

Increasingly, sports fans and data analysts have become entrenched in sports analytics. In some situations, especially on the team-side and analyst-side of sports analytics, predicting an opponent's formation could be critical to a team's strategy heading into a game or match. The act of predicting an opponent's or team's formation has not been a trivial task, however. There is an inherent permutation disorder in team sports, which increases the difficulty at which a system can predict a team's formation or a positioning of a team's players on a playing surface given limited information. The publication "Modelling and Predicting Adversarial Behaviour using Large Amounts of Spatiotemporal Data" by Xinyu (Felix) Wei, 2016, Ph.D. thesis, Queensland University of Technology, XP093083474, https://eprints.qut.edu.au/101959/1/ Xinyu_Wei_Thesis.pdf relates to modelling and predicting adversarial behaviour in both a single agent environment (i.e. tennis) as well as multi-agent environments (i.e. soccer, basketball). Given large amounts of spatio-temporal data, the goal is to learn an accurate model that can predict the behaviour of a "specific" player or a team against a "specific" opponent in a given match context.

### Summary

The invention is defined by the independent claims, the dependent claims relate to embodiments.

### Brief Description of the Drawings

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrated only typical embodiments of this disclosure and are therefore not to be considered limiting of its scope, for the disclosure may admit to other equally effective embodiments.

Figure 1 is a block diagram illustrating a computing environment, according to example embodiments.
Figures 2A is a block diagram illustrating a portion of a formation-learning process, according to example embodiments.
Figures 2B is a block diagram illustrating a portion of a formation-learning process, according to example embodiments.
Figure 3A is a flow diagram illustrating a method of predicting a formation of a team, according to example embodiments.
Figure 3B is a flow diagram illustrating a method of identifying formation templates for teams across a subset of games, according to example embodiments.
Figure 4A illustrates charts showing an exemplary player distribution, according to example embodiments.
Figure 4B illustrates charts showing an exemplary player distribution, according to example embodiments.
Figure 5A is a block diagram illustrating a computing device, according to example embodiments.
Figure 5B is a block diagram illustrating a computing device, according to example embodiments.

To facilitate understanding, identical reference numerals have been used, where possible, to designate identical elements that are common to the figures. It is contemplated that elements disclosed in one embodiment may be beneficially utilized on other embodiments without specific recitation.

### Detailed Description

Central to all machine learning algorithms is data representation. For multi-agent systems, selecting a representation which adequately captures the interactions among agents is challenging due to the latent group structure which tends to vary depending on various contexts. However, in multi-agent systems with strong group structure, a system may be configured to simultaneously learn this structure and map a set of agents to a consistently ordered representation for further learning. One or more techniques provided herein include a dynamic alignment method that provides a robust ordering of structured multi-agent data, which allows for representation learning to occur in a fraction of the time compared to conventional methods.

The natural representation for many sources of unstructured data is generally intuitive. For example, for images, a two-dimensional pixel representation; for speech, a spectrogram or linear filter-bank features; and for text, letters and characters. All of these representations possess a fixed, rigid structure in space, time, or sequential ordering which may be amenable for further learning. For other unstructured data sources, such as point clouds, semantic graphs, and multi-agent trajectories, such an initial ordered structure does not naturally exist. These data sources may generally be set or graph-like in nature, and therefore, the natural representation may be unordered, posing a significant challenge for many machine learning techniques.

In one specific example, a domain where this is particularly pronounced is in the fine-grained multi-agent player motion of team sport. Access to player tracking data has changed how to understand and analyze sports. More relevantly, sports have risen to an increasingly important space within the machine learning community as an application to expand understanding of adversarial multi-agent motion, interaction, and representation.

In sports, there typically exists strong, complex group-structure, which is less prevalent in other multi-agent systems, such as pedestrian tracking. Specifically, the formation of a team may capture not only the global shape and structure the group, but also may enable the ordering of each agent according to a "role" within the group structure. In this regard, sports may possess relational; structure similar to that of faces and bodies, which may be represented as a graph of key-points.

Unlike for faces and bodies, the representation graph in sports is dynamic as players constantly move and switch positions. Thus, dynamically discovering the appropriate representation of individual players according to their role in a formation, provides both structural information while learning a useful representation for subsequent tasks. Role-based alignment may allow for the reformatting of unstructured multi-agent data into a consistent vector format that enables subsequent machine learning to occur.

The one or more techniques provided herein formulate the role-based alignment as consisting of two phases: formation discovery and role assignment. Formation discovery may use unaligned data to learn an optimal formation template while the second phase may apply a bipartite mapping between agents and roles in each frame to produce "aligned data." A major limitation in conventional approaches is the speed of the template discover process. The improved approach to the above alignment methods described herein, provides a faster and more stable template discovery and representation learning. This enables on-the-fly discovery of the formation templates, which reduces computational load and enables new context-specific analysis. In other words, a user can select a plurality of games for analysis, and the present technique may be able to summarize the formation across those games.

The one or more techniques provided herein take a three-step approach to overcoming the deficiencies of conventional systems. Namely, formation discovery, roll assignment, and template clustering, with different methods for each. Such approach improves upon conventional approaches.

One such conventional approach of role-based assignment relies on hand-crafted templates against which the data could be aligned. The templates may be learned directly from the data, however, it relied on the application of a linear assignment technique (i.e., the Hungarian Algorithm) to assign players to a unique "role" in every frame as part of a formation discovery complex. As the Hungarian Algorithm has a run-complexity of $n^3$ and must be applied at every frame during every iteration of expectation maximization, this conventional approach is very time consuming - easily taking over 10 minutes (and often much longer) to execute on a single period of data for a single team. Furthermore, such approach is not guaranteed to converge and often results in pathological solutions.

The one or more techniques described herein improves upon the limitations of conventional approaches by providing a more mathematically consistent formulation of the problem. The one or more techniques described herein eliminates the need to run the Hungarian Algorithm at every iteration during training. This elimination allows the formation template to be discovered significantly more quickly than conventional methods - in a matter of a few seconds compared to many minutes. In addition to dramatically reducing the amount of time required to process many games of data as compared to conventional systems, the present approach also allows for formation templates to be discovered "live" (e.g., "on-the-fly") on contextually specific data for new forms of analysis. Additionally, because the present approach involves discovering the formation independent of the assignment step, the new learned formation is a better estimate of the team's actual formation, i.e., the role distributes are tighter and overlap less.

Still further, the present approach is intrinsically more stable than conventional approaches as it converges to the maximum likelihood estimate of the underlying generating distributions. For example, the present approach may include a resetting procedure used during training to ensure convergences. Such approach results in a more reliable formation prediction because it is now ensured that the convergence was proper and also requires less monitoring and re-running of examples, which could end up in spurious solutions. Additionally, the metric used in the template alignment may utilize the full distributions shape, not just the distribution means, and therefore may ensure better matching and consistency.

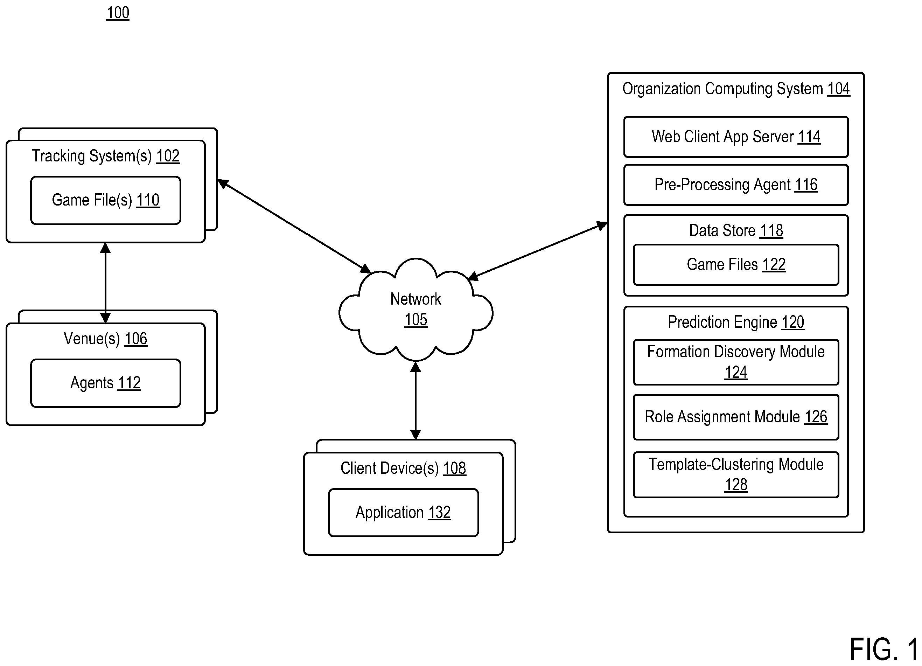

Figure 1 is a block diagram illustrating a computing environment 100, according to example embodiments. Computing environment 100 may include tracking system 102, organization computing system 104, and one or more client devices 108 communicating via network 105.

Network 105 may be of any suitable type, including individual connections via the Internet, such as cellular or Wi-Fi networks. In some embodiments, network 105 may connect terminals, services, and mobile devices using direct connections, such as radio frequency identification (RFID), near-field communication (NFC), Bluetooth™, low-energy Bluetooth™ (BLE), Wi-Fi™, ZigBee™, ambient backscatter communication (ABC) protocols, USB, WAN, or LAN. Because the information transmitted may be personal or confidential, security concerns may dictate one or more of these types of connection be encrypted or otherwise secured. In some embodiments, however, the information being transmitted may be less personal, and therefore, the network connections may be selected for convenience over security.

Network 105 may include any type of computer networking arrangement used to exchange data or information. For example, network 105 may be the Internet, a private data network, virtual private network using a public network and/or other suitable connection(s) that enables components in computing environment 100 to send and receive information between the components of environment 100.

Tracking system 102 may be positioned in a venue 106. For example, venue 106 may be configured to host a sporting event that includes one or more agents 112. Tracking system 102 may be configured to record the motions of all agents (i.e., players) on the playing surface, as well as one or more other objects of relevance (e.g., ball, referees, etc.). In some embodiments, tracking system 102 may be an optically-based system using, for example, a plurality of fixed cameras. For example, a system of six stationary, calibrated cameras, which project the three-dimensional locations of players and the ball onto a two-dimensional overhead view of the court may be used. In some embodiments, tracking system 102 may be a radio-based system using, for example, radio frequency identification (RFID) tags worn by players or embedded in objects to be tracked. Generally, tracking system 102 may be configured to sample and record, at a high frame rate. Tracking system 102 may be configured to store at least player identity and positional information (e.g., *(x, y)* position) for all agents and objects (e.g., ball, puck, etc.) on the playing surface for each frame in a game file 110.

Tracking system 102 may be configured to communicate with organization computing system 104 via network 105. Organization computing system 104 may be configured to manage and analyze the data captured by tracking system 102. Organization computing system 104 may include at least a web client application server 114, a pre-processing agent 116, a data store 118, and prediction engine 120. Each of pre-processing agent 116 and prediction engine 120 may be comprised of one or more software modules. The one or more software modules may be collections of code or instructions stored on a media (e.g., memory of organization computing system 104) that represent a series of machine instructions (e.g., program code) that implement one or more algorithmic steps. Such machine instructions may be the actual computer code the processor of organization computing system 104 interprets to implement the instructions or, alternatively, may be a higher level of coding of the instructions that is interpreted to obtain the actual computer code. The one or more software modules may also include one or more hardware components. One or more aspects of an example algorithm may be performed by the hardware components (e.g., circuitry) itself, rather as a result of the instructions.

Data store 118 may be configured to store one or more game files 122. Each game file 122 may be captured and generated by a tracking system 102. In some embodiments, each of the one or more game files 122 may include all the raw data captured from a particular game or event. For example, the raw data captured from a particular game or event may include x-,y-coordinates of the game.

Pre-processing agent 116 may be configured to process data retrieved from data store 118. For example, pre-processing agent 116 may be configured to generate one or more sets of information that may be used to train components of prediction engine 120 that are associated with predicting a team's formation. Pre-processing agent 116 may scan each of the one or more game files stored in data store 118 to identify one or more metrics that include, but are not limited to, the team that has possession, the opponent, number of players on each team, x-,y-coordinates of the ball (or puck), and the like. In some embodiments, game context may be provided, such as, but not limited to, the current score, time remaining in the game, current quarter/half/inning/period, and the like.

Prediction engine 120 may be configured to predict the underlying formation of a team. Mathematically, the goal of role-alignment procedure may be to find the transformation $A: \{U_1, U_2, ..., U_n\} \times M \rightarrow [R_1, R_2, ..., R_K]$, which may map the unstructured set *U* of *N* player trajectories to an ordered set (i.e., a vector) of K role-trajectories R. Each player trajectory itself may be an ordered set of positions $U_n = [x_{s,n}]_{s=1}^{S}$ for an agent $n \in [1, N]$ and a frame s $\in [1, S]$. In some embodiments, M may represent the optimal permutation matrix that enables such an ordering. The goal of prediction engine 120 may be to find the most probable set of $\mathcal{F}^*$ of two-dimensional (2D) probability density functions:

$$\mathcal{F}^* = \arg\max_{\mathcal{F}} P(\mathcal{F}|\mathbf{R})$$

$$P(\mathbf{x}) = \sum_{n=1}^{N} P(\mathbf{x}|n)P(n) = \frac{1}{N}\sum_{n=1}^{N} P_n(\mathbf{x})$$

In some embodiments, this equation may be transformed into one of entropy minimization where the goal is to reduce (e.g., minimize) the overlap (i.e., the KL-Divergence) between each role. As such, in some embodiments, the final optimization equation in terms of total entropy $H$ may become:

$$\mathcal{F}^* = \arg\max_{\mathcal{F}} \sum_{n=1}^{N} H(\mathbf{x}|n)$$

As shown, prediction engine 120 may include formation discovery module 124, role assignment module 126, and template clustering module 128, each corresponding to a distinct phase of the prediction process. Formation discovery module 124 may be configured to learn the distributions which maximize the likelihood of the data. Role assignment module 126 may be configured to map each player position to a "role" distribution in each frame. Once the data has been aligned, template clustering module 128 may be configured to cluster the full set of data to discover new formations.

Client device 108 may be in communication with organization computing system 104 via network 105. Client device 108 may be operated by a user. For example, client device 108 may be a mobile device, a tablet, a desktop computer, or any computing system having the capabilities described herein. Users may include, but are not limited to, individuals such as, for example, subscribers, clients, prospective clients, or customers of an entity associated with organization computing system 104, such as individuals who have obtained, will obtain, or may obtain a product, service, or consultation from an entity associated with organization computing system 104.

Client device 108 may include at least application 132. Application 132 may be representative of a web browser that allows access to a website or a stand-alone application. Client device 108 may use access application 132 to access one or more functionalities of organization computing system 104. Client device 108 may communicate over network 105 to request a webpage, for example, from web client application server 114 of organization computing system 104. For example, client device 108 may be configured to execute application 132 to access content managed by web client application server 114. The content that is displayed to client device 108 may be transmitted from web client application server 114 to client device 108, and subsequently processed by application 132 for display through a graphical user interface (GUI) of client device 108.

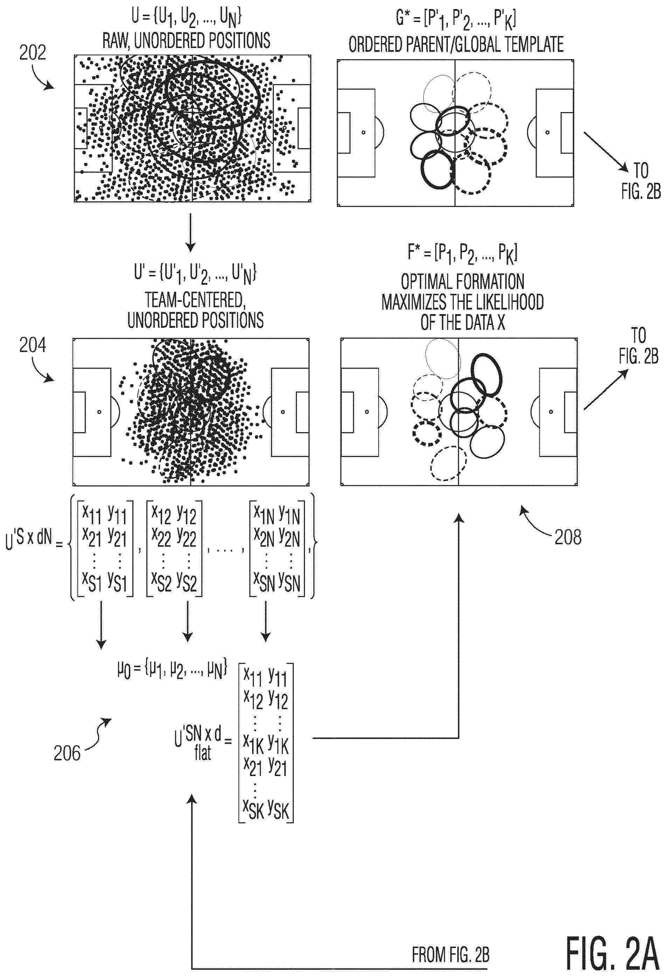

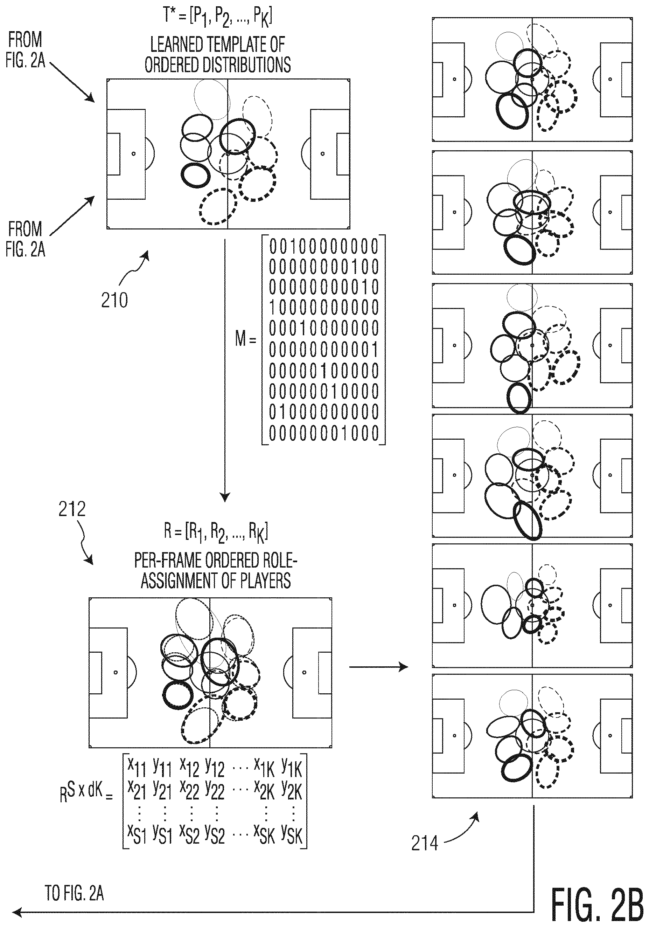

Figures 2A and 2B are blocks diagram illustrating a formation-learning process 200, according to example embodiments. The formation-learning process 200 is illustrated over two figures for ease of discussion.

As shown, at step 202, organization computing system 104 may receive player tracking data for a plurality of players across a plurality of events. In some embodiments, the player tracking data may consist of several hundred games. The player tracking data may be captured by tracking system 102, which may be configured to record the $(x, y)$ positions of the players at a high frame rate (e.g., 10Hz). In some embodiments, the player tracking data may further include single-frame event-labels (e.g., pass, shot, cross) in each frame of player tracking data. These frames may be referred to as "event frames." As shown, the initial player tracking data may be represented as a set $U$ of $N$ player trajectories. Each player trajectory itself may be an ordered set of positions $\mathbf{U}_n = \left[x_{s,n}\right]_{s=1}^{S}$ for an agent $n \in [1, N]$ and a frame $s \in [1, S]$.

In some embodiments, only those event frames may be used for training. Generally, reducing the amount of data needed to discover the formation improves run-time. A single period of soccer, for example, has roughly 15,000 frames of in-play data. However, only about 10% of those contain events (e.g., pass, shot, touch, cross, etc.). By training prediction engine 120 on only those frames, organization computing system 104 may be able to gain a substantial improvement (e.g., about 10x) in speed simply due to the reduction of data. Further, the formation learned on the event frames is effectively identical to that learned on the entire formation. In fact, because the event frames are semantically more meaningful (by virtue of the fact that they contain events, as opposed to, for example, the frames where the goalie is holding the ball or a pass is in flight), the formations learned tend to be better (i.e., tighter as well as appearing better to a human expert) than those learned on a random selection of data the same size or on the entire data set. Further, use of event frames seems to reduce the likelihood of the model finding pathological solutions.

At step 204, pre-processing agent 116 may normalize the raw position data of the players. For example, pre-processing agent 116 may normalize the raw position data of the players so that all teams in the player tracking data are attacking from left to right and have zero mean in each frame. Such normalization may result in the removal of translational effects from the data. This may yield the set $U' = \{U'_1, U'_2, \ldots, U'_n\}$.

At step 206, pre-processing agent 116 may initialize cluster centers of the normalized data set for formation discovery with the average player positions. For example, average player positions may be represented by the set $\mu_0 = \{\mu_1, \mu_2, \ldots, \mu_3\}$. Pre-processing agent 116 may take the average position of each player in the normalized data and may initialize the normalized data based on the average player positions. Such initialization of the normalized data based on average player position may act as initial roles for each player to minimize data variance.

At step 208, formation discovery module 124 may be configured to learn the distributions which maximize the likelihood of the data. Formation discovery module 124 may structure the initialized data into a single $(SN) \times d$ vector, where S may represent the total number of frames, N may represent the total number of agents (e.g., ten outfielders in the case of soccer, five players in the case of basketball, fifteen players in the case of rugby, etc.) and d may represent the dimensionality of the data (e.g., $d = 2$).

Formation discovery module 124 may then initiate a formation discovery algorithm. For example, formation discovery module 124 may initialize a K-means algorithm using the player average positions and execute to convergence. Executing the K-means algorithm to convergence produces better results than conventional approaches of running a fixed number of iterations.

Formation discovery module 124 may then initialize a Gaussian Mixture Model (GMM) using cluster centers of the last iteration of the K-means algorithm. By parametrizing the distribution as a mixture of K Gaussians (with K being equal to the number of "roles," which is usually also equal to N, the number of players), formation discovery module 124 may be able to identify an optimal formation that maximizes the likelihood of the data x. In other words, GMM may be configured to identify $\mathcal{F}^* = \{P_1, P_2, \ldots, P_K\}$, where $\mathcal{F}^*$ may represent the optimal formation that maximizes the likelihood of the data x. Therefore, instead of stopping the process after the last iteration of the K-means algorithm, formation discovery module 124 may use GMM clustering, as the ellipse may better capture the shape of each player role compared to only a K-means clustering technique, which captures the spherical nature of each role's data cloud.

Further, GMMs are known to suffer from component collapse and become trapped in pathological solutions. Such collapse may result in non-sensible clustering, i.e., non-sensical outputs that may not be utilized. To combat this, formation discovery module 124 may be configured to monitor eigenvalues ($\lambda_i$) of each of the components or parameters of the GMM throughout the expectation maximization process. If formation discovery module 124 determines that the eigenvalue ratio of any component becomes too large or too small, the next iteration may run a Soft K-Means (i.e., a mixture of Gaussians with spherical covariance) update instead of the full-covariance update. Such process may be performed to ensure that the eventual clustering output is sensible. For example, formation discovery module 124 may monitor how the parameters of the GMM are converging; if the parameters of the GMM are erratic (e.g., "out of control"), formation discovery module 124 may identify such erratic behavior and then slowly return the parameters back within the solution space using a soft K-means update.

In order to enforce an ordering, at step 210 formation discovery module 124 may align the optimal formation $\mathcal{F}^*$ to a parent template G*, which is an ordered set of distributions. G* may represent an overall reference formation (or reference ordering) that may be used to compare formations from different games or across different competitions. In some embodiments, formation discovery module 124 may align $\mathcal{F}^*$ to G* by finding the Bhattacharyya distance between each distribution in $\mathcal{F}^*$ and $G^*$ given by:

$$D_B = \frac{1}{8}\left(\mu \mathcal{F}_i^* - \mu G_j^*\right)^T \sigma^{-1}\left(\mu \mathcal{F}_i^* - \mu G_j^*\right) + \frac{1}{2}\ln\frac{\det\sigma}{\sqrt{\det\sigma_{\mathcal{F}_i^*}\det\sigma_{G_j^*}}}$$

where $\sigma = \frac{\sigma_{\mathcal{F}_i^*} + \sigma_{G_j^*}}{2}$. This may create a $K \times K$ cost matrix that may be used to find the best assignment. This may result in a learned template $\mathcal{T}^*$, which may be an ordered set of distributions with an established ordering that maximizes the likelihood of data.

At step 212, role assignment module 126 may map each player position to a "role" distribution in learned template $\mathcal{T}^*$. For example, role assignment module 126 may map each player in each frame to a specific role with the restriction that only one player may occupy a role in a given frame. To do this, role assignment module 126 may find the likelihood that each player belongs to each of the discovered distributions in each frame. This may produce an $N \times K$ cost matrix for each frame. Role assignment module 126 may then apply the Hungarian algorithm to make the optimal assignment. The aligned data may be represented as an S × *(dK)* matrix R, which is a per-frame ordered role assignment of players. In essence, role assignment module 126 may apply the Hungarian algorithm to find the permutation matrix, which may minimize the overall total cost matrix (i.e., what set of orderings of players to a particular role will yield the overall minimum total cost where the cost matrix is a pair-wise distance between each position and roll in the formation template).At step 214, template clustering module 128 may cluster the full set of data to discover new formations based on matrix R. Sub-templates may be found either through a flat or hierarchical clustering. Generically, template clustering module 128 may seek to find a set of clusters *C*, which may partition the data into distinct states according to:

$$\arg\min_C \sum_{C_k \in C} \sum_{R_i \in C_k} \left\| P(R_i) - P(R_j) \right\|_2$$

For flat clustering, a dN-dimensional K-Means model may be fit to the data. To aid in initializing the cluster, template clustering module 128 may seed the model with template means plus a small amount of noise. To determine the optimal number of clusters, template clustering module may use:

$$\mathbb{E}(\boldsymbol{R}) = \frac{1}{|\boldsymbol{R}|} \sum_{C_k \in C} \sum_{R_i \in C_k} \frac{\|P(\boldsymbol{R}_i) - \mu_{kn}\|_2 - \|P(\boldsymbol{R_i}) - \mu_k\|_2}{\|P(\boldsymbol{R}_i) - \mu_{kn}\|_2}$$

where $\mu_k$ may represent the mean of the cluster that example $\boldsymbol{R}_i$ belongs to and $\mu_{kn}$ may represent the mean of the closest neighbor cluster $\boldsymbol{R}_i$. Such approach may measure the dissimilarity between neighboring clusters and the compactness of the data within each cluster. By maximizing IE, template clustering module 128 may seek to capture the most discriminative clusters

In some embodiments, to learn a tree of templates through hierarchical clustering, template clustering module 128 may apply a tree-based alignment. For example, to leam a template, instead of using a single shot of clustering, the tree-based method may use a series of clustering steps that may traverse through a tree.

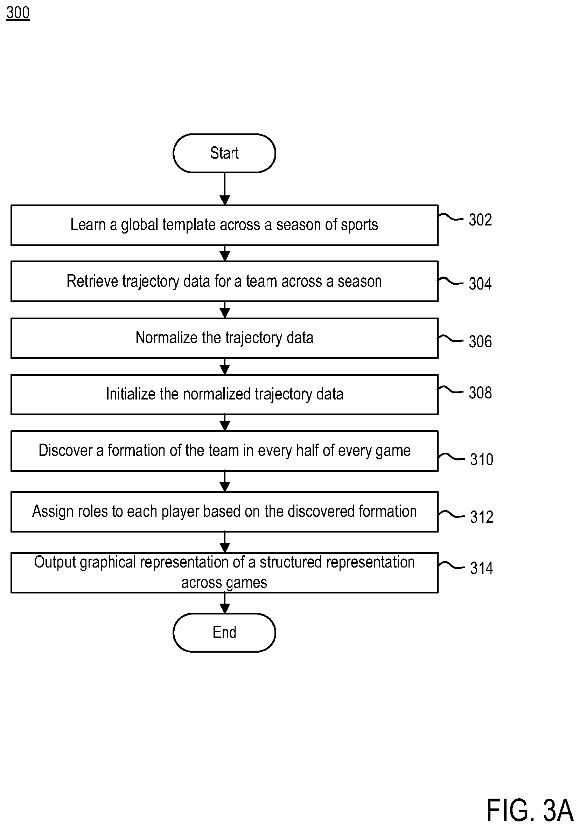

Figure 3A is a flow diagram illustrating a method 300 of identifying formation templates for teams across a season, according to example embodiments. Method 300 may begin at step 302.

At step 302, organization computing system 104 may learn a global template across a season of sports. Although the present discussion is focused on the sport of soccer, those skilled in the art readily understand that disclosed herein can be applied to other sports. In some embodiments, prediction engine 120 may learn the global template by selecting trajectory data randomly across a given season for all teams and all games. For example, to train prediction engine 120 to leam the global template, prediction engine 120 may sample data points cross an entire season of tracking data (instead of a single game). Such functionality enables prediction engine 120 to learn the overall reference template (e.g., *G\*)*.

At step 304, organization computing system 104 may retrieve trajectory data for a team across a season. In some embodiments, the trajectory data may consist of trajectory data for a plurality of games in a season. The trajectory data may be captured by tracking system 102, which may be configured to record the *(x, y)* positions of the players at a high frame rate (e.g., 10Hz). In some embodiments, the trajectory data may further include single-frame event-labels (e.g., pass, shot, cross) in each frame of player tracking data. As shown, the trajectory data may be represented as a set *U* of *N* player trajectories. Each player trajectory itself may be an ordered set of positions $\boldsymbol{U}_n = \left[x_{s,n}\right]_{s=1}^{S}$ for an agent $n \in [1, N]$ and a frame s $\in$ [1, *S*].

At step 306, organization computing system 104 may normalize the retrieved trajectory data. For example, pre-processing agent 116 may normalize the raw position data of the players so that trajectory data are attacking from left to right and have zero mean in each frame. Such normalization may result in the removal of translational effects from the data. This may yield the set $\boldsymbol{U}' = \{\boldsymbol{U}'_1, \boldsymbol{U}'_2, \ldots, \boldsymbol{U}'_n\}$.

At step 308, organization computing system 104 may initialize the normalized trajectory data. For example, average player positions may be represented by the set $\mu_0 = \{\mu_1, \mu_2, \ldots, \mu_3\}$. Pre-processing agent 116 may initialize the normalized data based on the average player positions.

At step 310, organization computing system 104 may discover a formation of the team in every half of every game. For example, formation discovery module 124 may identify a set of player trajectories corresponding to a given half of a game. Based on the set of player trajectories, the formation discovery module 124 may identify an optimal formation of players, e.g., $\mathcal{F}_i^*$, where i may represent the game in question. Once the optimal formations $\mathcal{F}_i^*$ are generated, formation discovery module 124 may align each optimal formation $\mathcal{F}_i^*$ to the global template (e.g., G*) generated in step 302. This may result in a learned template $\mathcal{T}_i^*$, which may be an ordered set of distributions with an established ordering, for each optimal formation $\mathcal{F}_i^*$.

At step 312, role assignment module 126 may map each player position to a "role" distribution in learned template $\mathcal{T}^*$. For example, role assignment module 126 may map each player in each frame to a specific role with the restriction that only one player may occupy a role in a given frame. To do this, role assignment module 126 may find the likelihood that each player belongs to each of the discovered distributions in each frame. Role assignment module 126 may then apply the Hungarian algorithm to make the optimal assignment.

At step 314, organization computing system 104 may generate a graphical representation of a structured representation of a team's formation across games. The graphical representation may illustrate how often a team operates out of the same formation or how varied a team's formation in across games.

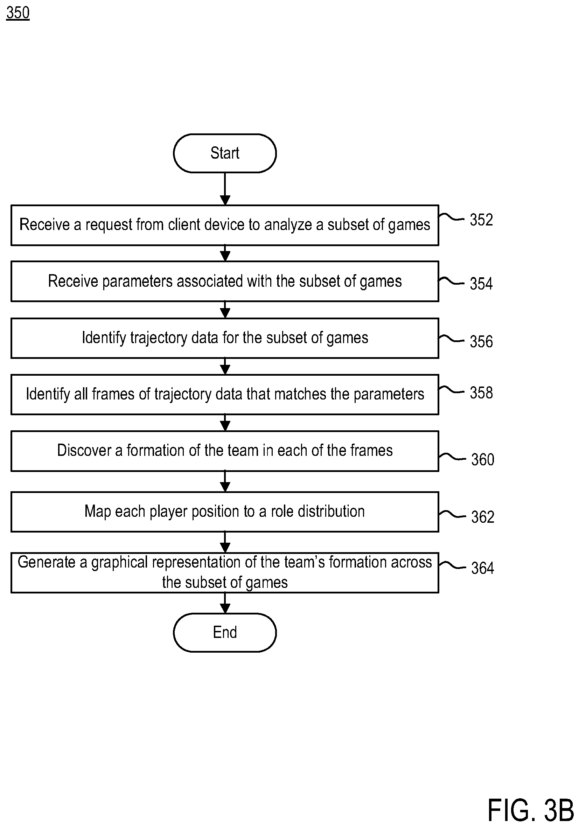

Figure 3B is a flow diagram illustrating a method 350 of identifying formation templates for teams across a subset of games, according to example embodiments. Method 350 may begin at step 352.

At step 352, organization computing system 104 may receive a request from client device 108 for prediction engine 120 to analyze a subset of games. In some embodiments, the subset of games may correspond to the same team (e.g., same team but different opponents). In some embodiments, the subset of games may include games from a single season. In some embodiments, the subset of games may include games across seasons. Organization computing system 104 may receive the request from client device 108 via application 132 executing thereon. For example, client device 108 may have direct access to prediction engine 120 functionality using application 132 executing thereon. In some embodiments, application 132 may be representative of a web browser and a user of client device 108 may access the functionality of prediction engine 120 via a uniform resource locator (URL). In some embodiments, application 132 may be representative of a stand-alone application (e.g., mobile application) with direct access to prediction engine 120 functionality.

In some embodiments, method 350 may include step 354. At step 354, organization computing system 104 may receive one or more parameters associated with the subset of games. In some embodiments, in addition to receiving a selection of a subset of games for analysis, organization computing system 104 may receive, from client device 108, specific contexts within games for analysis. For example, a user of client device 108 may specify specific contexts within a game such as, but not limited to, counter-attacks or maintenance phases. In this manner, client device 108 may dictate which formations a user would like to see.

At step 356, organization computing system 104 may identify trajectory data for identified subset of games. The trajectory data may be captured by tracking system 102, which may be configured to record the *(x, y)* positions of the players at a high frame rate (e.g., 10Hz). In some embodiments, the trajectory data may further include single-frame event-labels (e.g., pass, shot, cross) in each frame of player tracking data. As shown, the trajectory data may be represented as a set *U* of *N* player trajectories. Each player trajectory itself may be an ordered set of positions $U_n = \left[ x_{s,n} \right]_{s=1}^{S}$ for an agent n ∈ *[1, N]* and a frame s ∈ [1,*S*].

At step 358, organization computing system 104 may identify all frames of trajectory data that matches the specified context. For example, pre-processing agent 116 may identify all frames of trajectory data that correspond to counter-attacks or maintenance phases of a game.

At step 360, organization computing system 104 may discover a formation of the team in each of the identified frames. For example, formation discovery module 124 may identify a set of player trajectories corresponding to the identified frames of trajectory data. Based on the set of player trajectories, the formation discovery module 124 may identify an optimal formation of players, e.g., $\mathcal{F}_i^*$, where i may represent the game in question. Once the optimal formations $\mathcal{F}_i^*$ are generated, formation discovery module 124 may align each optimal formation $\mathcal{F}_i^*$ to a global template (e.g., G*) based on randomly selecting trajectory data across a given season for all teams and all games. This may result in a learned template $\mathcal{T}_i^*$, which may be an ordered set of distributions with an established ordering, for each optimal formation $\mathcal{F}_i^*$.

At step 362, organization computing system 104 may map each player position to a "role" distribution in learned template $\mathcal{T}^*$. For example, role assignment module 126 may map each player in each frame to a specific role with the restriction that only one player may occupy a role in a given frame. To do this, role assignment module 126 may find the likelihood that each player belongs to each of the discovered distributions in each frame. Role assignment module 126 may then apply the Hungarian algorithm to make the optimal assignment.

At step 364, organization computing system 104 may generate a graphical representation of a structured representation of a team's formation across the selected games. In some embodiments, the structured representation may correspond to the selected context. For example, the graphical representation may illustrate a team's formation and role assignment across the subset of games for the specified context (e.g., counter-attack, maintenance phase, etc.).

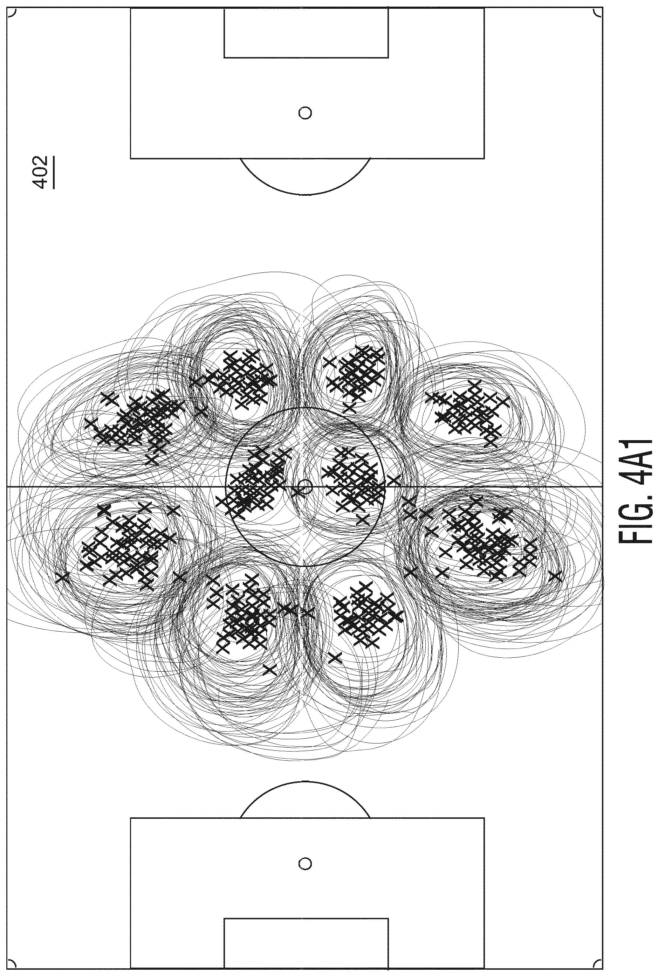

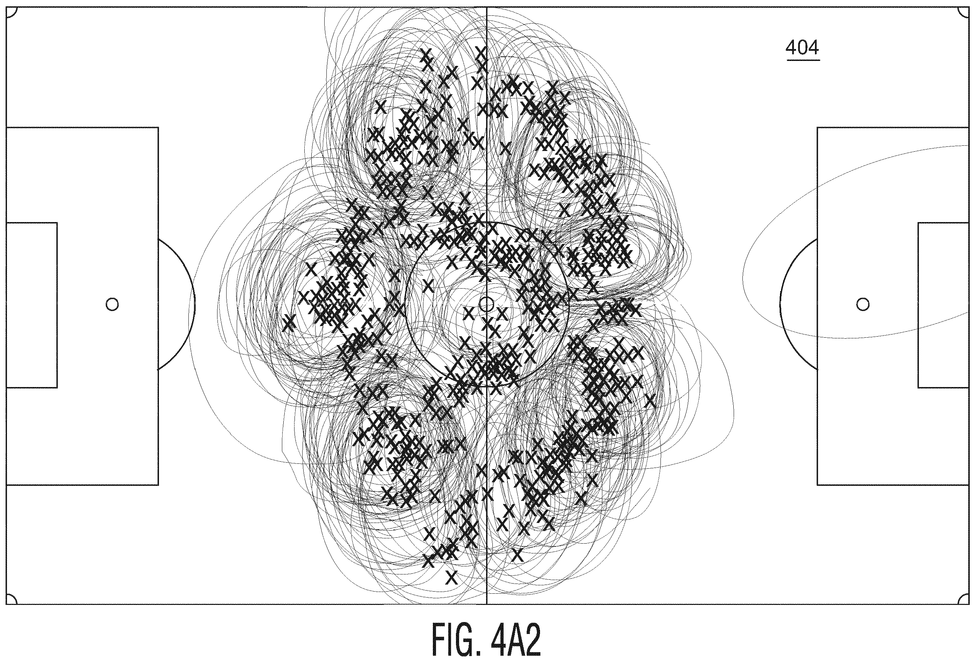

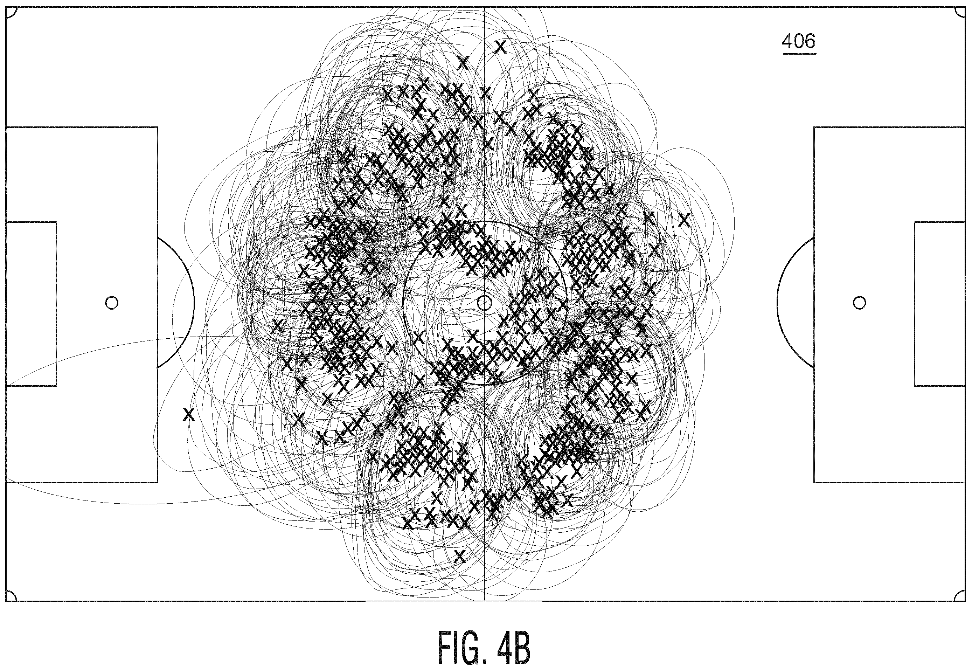

Figures 4A and 4B illustrate exemplary graphical representations of a structured representation of each team's formation across games of a season, according to example embodiments. As shown, the formation discovery process and alignment algorithm, as discussed above in conjunction with Figures 2A, 2B, 3A, and 3B, were run on every team-game-period combination of an entire season of soccer. Under conventional approaches, this process would take upwards of 20 minutes to process - per game. Under the present approach, this process could be executed in less than 10 seconds per game.

Each plot may correspond to a team. A template may be learned for each half of every game and aligned to the global template, as discussed above in conjunction with Figures 3A and 3B. The centroids of each role-distribution are plotted in black. As illustrated, some teams consistently operate out of the same formation and, therefore, the templates and distribution centers are well isolated across the season (e.g., reference numeral 402). Other teams, on the other hand, play different formations in different matches. Therefore, the game-to-game templates may vary dramatically (e.g., reference numerals 404 and 406). The present techniques are able to learn these various templates and align them so that a common, structured representation can be used across matches.

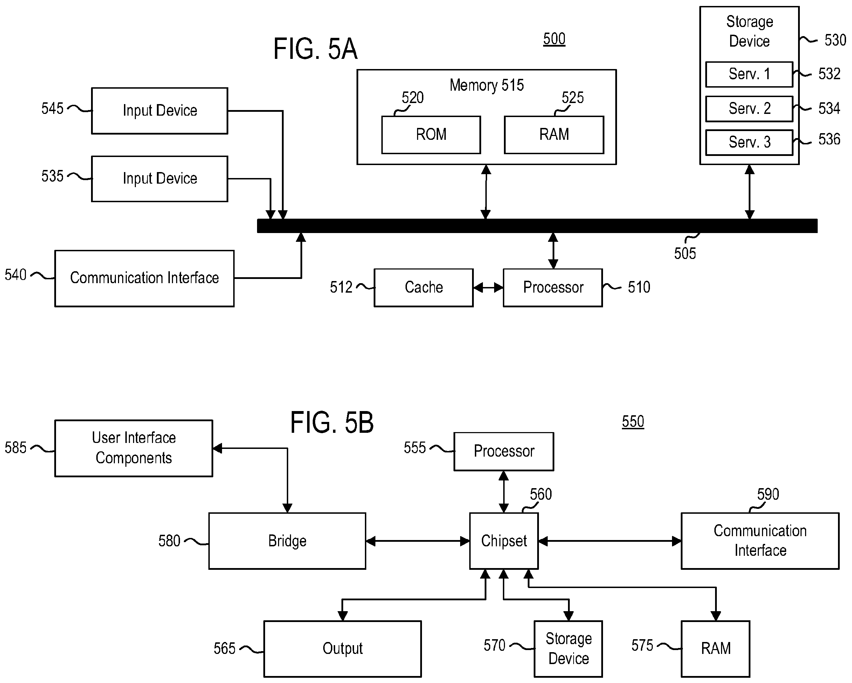

Figure 5A illustrates a system bus computing system architecture 500, according to example embodiments. System 500 may be representative of at least a portion of organization computing system 104. One or more components of system 500 may be in electrical communication with each other using a bus 505. System 500 may include a processing unit (CPU or processor) 510 and a system bus 505 that couples various system components including the system memory 515, such as read only memory (ROM) 520 and random access memory (RAM) 525, to processor 510. System 500 may include a cache of high-speed memory connected directly with, in close proximity to, or integrated as part of processor 510. System 500 may copy data from memory 515 and/or storage device 530 to cache 512 for quick access by processor 510. In this way, cache 512 may provide a performance boost that avoids processor 510 delays while waiting for data. These and other modules may control or be configured to control processor 510 to perform various actions. Other system memory 515 may be available for use as well. Memory 515 may include multiple different types of memory with different performance characteristics. Processor 510 may include any general-purpose processor and a hardware module or software module, such as service 1 532, service 2 534, and service 3 536 stored in storage device 530, configured to control processor 510 as well as a special-purpose processor where software instructions are incorporated into the actual processor design. Processor 510 may essentially be a completely self-contained computing system, containing multiple cores or processors, a bus, memory controller, cache, etc. A multicore processor may be symmetric or asymmetric.

To enable user interaction with the computing device 500, an input device 545 may represent any number of input mechanisms, such as a microphone for speech, a touch-sensitive screen for gesture or graphical input, keyboard, mouse, motion input, speech and so forth. An output device 535 may also be one or more of a number of output mechanisms known to those of skill in the art. In some instances, multimodal systems may enable a user to provide multiple types of input to communicate with computing device 500. Communications interface 540 may generally govern and manage the user input and system output. There is no restriction on operating on any particular hardware arrangement and therefore the basic features here may easily be substituted for improved hardware or firmware arrangements as they are developed.

Storage device 530 may be a non-volatile memory and may be a hard disk or other types of computer readable media which may store data that are accessible by a computer, such as magnetic cassettes, flash memory cards, solid state memory devices, digital versatile disks, cartridges, random access memories (RAMs) 525, read only memory (ROM) 520, and hybrids thereof.

Storage device 530 may include services 532, 534, and 536 for controlling the processor 510. Other hardware or software modules are contemplated. Storage device 530 may be connected to system bus 505. In one aspect, a hardware module that performs a particular function may include the software component stored in a computer-readable medium in connection with the necessary hardware components, such as processor 510, bus 505, display 535, and so forth, to carry out the function.

Figure 5B illustrates a computer system 550 having a chipset architecture that may represent at least a portion of organization computing system 104. Computer system 550 may be an example of computer hardware, software, and firmware that may be used to implement the disclosed technology. System 550 may include a processor 555, representative of any number of physically and/or logically distinct resources capable of executing software, firmware, and hardware configured to perform identified computations. Processor 555 may communicate with a chipset 560 that may control input to and output from processor 555. In this example, chipset 560 outputs information to output 565, such as a display, and may read and write information to storage device 570, which may include magnetic media, and solid state media, for example. Chipset 560 may also read data from and write data to RAM 575. A bridge 580 for interfacing with a variety of user interface components 585 may be provided for interfacing with chipset 560. Such user interface components 585 may include a keyboard, a microphone, touch detection and processing circuitry, a pointing device, such as a mouse, and so on. In general, inputs to system 550 may come from any of a variety of sources, machine generated and/or human generated.

Chipset 560 may also interface with one or more communication interfaces 590 that may have different physical interfaces. Such communication interfaces may include interfaces for wired and wireless local area networks, for broadband wireless networks, as well as personal area networks. Some applications of the methods for generating, displaying, and using the GUI disclosed herein may include receiving ordered datasets over the physical interface or be generated by the machine itself by processor 555 analyzing data stored in storage 570 or 575. Further, the machine may receive inputs from a user through user interface components 585 and execute appropriate functions, such as browsing functions by interpreting these inputs using processor 555.

It may be appreciated that example systems 500 and 550 may have more than one processor 510 or be part of a group or cluster of computing devices networked together to provide greater processing capability.

While the foregoing is directed to embodiments described herein, other and further embodiments may be devised without departing from the basic scope thereof. For example, aspects of the present disclosure may be implemented in hardware or software or a combination of hardware and software. One embodiment described herein may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory (ROM) devices within a computer, such as CD-ROM disks readably by a CD-ROM drive, flash memory, ROM chips, or any type of solid-state non-volatile memory) on which information is permanently stored; and (ii) writable storage media (e.g., floppy disks within a diskette drive or hard-disk drive or any type of solid state random-access memory) on which alterable information is stored. Such computer-readable storage media, when carrying computer-readable instructions that direct the functions of the disclosed embodiments, are embodiments of the present disclosure.

**Claims**

1.  A computer-implemented method of learning player distribution and role assignments from player tracking data captured by a tracking system (102) configured to record motion of players on a playing surface during a sporting event, the method comprising:

    retrieving, by a computing system (104), player tracking data for a plurality of players across a plurality of events, the player tracking data comprising coordinates of player positions during each event; **characterised by**
    initializing, by the computing system, the player tracking data based on an average position of each player in the plurality of events;
    learning, by the computing system, an optimal formation of player positions based on the player tracking data using a Gaussian mixture model;
    aligning, by the computing system, the optimal formation of player positions to a global template by identifying a distance between each distribution in the optimal formation and each distribution in the global template to generate a learned formation template; and
    assigning, by the computing system, a role to each player in the learned formation template.

2.  A non-transitory computer readable medium comprising instructions which, when executed by a computing system (104), cause the computing system to carry out the method of claim 1.

3.  The method of claim 1 or the non-transitory computer readable medium of claim 2, further comprising:

    generating, by the computing system, aligned data comprising a per-frame ordered role assignment of players; and
    clustering, by the computing system, the aligned data to identify new formations.

4.  The method of claim 3 or the non-transitory computer readable medium of claim 3, wherein the clustering comprises a flat or hierarchical clustering algorithm.

5.  The method of claim 1, claim 3 or claim 4 or the non-transitory computer readable medium of claim 2, claim 3 or claim 4, further comprising:
    filtering, by the computing system, the player tracking data to identify event frames corresponding to frames of tracking data in which an event occurs.

6.  The method of claim 1 or of any of claims 3 to 5 or the non-transitory computer readable medium of claim 2 or of any of claims 3 to 5, further comprising:
    normalizing, by the computing system, the player tracking data so that an attacking trajectory of all players in the player tracking data is from left to right of the playing surface.

7. The method of claim 1 or of any of claims 3 to 6 or the non-transitory computer readable medium of claim 2 or of any of claims 3 to 6, wherein learning, by the computing system, the optimal formation of player positions based on the player tracking data using the Gaussian mixture model comprises:
parametrizing a distribution of player positions as a mixture of K Gaussians to identify the optimal formation.

8. The method of claim 1 or of any of claims 3 to 7 or the non-transitory computer readable medium of claim 2 or of any of claims 3 to 7, wherein learning, by the computing system, the optimal formation of player positions based on the player tracking data using the Gaussian mixture model comprises:

monitoring eigenvalues throughout the learning to determine if an eigenvalue ratio is outside a range of acceptable values; and
upon determining that the eigenvalue ratio is outside the range of acceptable values, resetting the Gaussian mixture model before continuing the learning.

9. A system to learn player distribution and role assignments from player tracking data captured by a tracking system (102) configured to record motion of players on a playing surface during a sporting event, the system comprising:

a processor; and
a memory having programming instructions stored thereon, which, when executed by the processor, performs operations comprising:

receiving a request from a client device to identify a team's formation and role assignment across a selected subset of games, wherein the request defines a context within each game of the subset of games;
retrieving player tracking data for the selected subset of games, the player tracking data comprising coordinates of player positions during each game;
filtering the player tracking data to identify frames corresponding to the defined context;
learning an optimal formation of player positions based on the player tracking data and the defined context using a Gaussian mixture model to generate a learned formation template;
assigning a role to each player in the learned formation template; and
generating a graphical representation of a structured representation of a team's formation across the subset of games for the defined context.

10. The system of claim 9, wherein the operations further comprise:

generating aligned data comprising a per-frame ordered role assignment of players; and
clustering the aligned data to identify new formations.

11. The system of claim 10, wherein the clustering comprises a flat or hierarchical clustering algorithm.

12. The system of claim 9, claim 10 or claim 11, wherein the defined context corresponds to an in-game situation.

13. The system of claim 9 or of any of claims 10 to 12, wherein learning the optimal formation of player positions based on the player tracking data using the Gaussian mixture model comprises:
parametrizing a distribution of player positions as a mixture of K Gaussians to identify the optimal formation.

14. The system of claim 9 or of any of claims 10 to 13, wherein learning the optimal formation of player positions based on the player tracking data using the Gaussian mixture model comprises:

monitoring eigenvalues throughout the learning to determine if an eigenvalue ratio is outside a range of acceptable values; and
upon determining that the eigenvalue ratio is outside the range of acceptable values, resetting the Gaussian mixture model before continuing the learning.

**Patentansprüche**

1. Computerimplementiertes Verfahren zum Lernen von Spielerverteilung und Rollenzuweisungen aus Spielerverfolgungsdaten, die durch ein Verfolgungssystem (102) erfasst werden, das dazu konfiguriert ist, Bewegung von Spielern auf einer Spielfläche während eines Sportereignisses aufzuzeichnen, wobei das Verfahren Folgendes umfasst:

Abrufen, durch ein Rechensystem (104), von Spielerverfolgungsdaten für eine Vielzahl von Spielern über eine Vielzahl von Ereignissen, wobei die Spielerverfolgungsdaten Koordinaten von Spielerpositionen während jedes Ereignisses umfassen;

**gekennzeichnet durch**

Initialisieren, durch das Rechensystem, der Spielerverfolgungsdaten basierend auf einer durchschnittlichen Position jedes Spielers in der Vielzahl von Ereignissen;

Lernen, durch das Rechensystem, einer optimalen Formation von Spielerpositionen basierend auf den Spielerverfolgungsdaten unter Verwendung eines Gaußschen Mischungsmodells;

Ausrichten, durch das Rechensystem, der optimalen Formation von Spielerpositionen an eine globale Vorlage durch Identifizieren eines Abstands zwischen jeder Verteilung in der optimalen Formation und jeder Verteilung in der globalen Vorlage, um eine gelernte Formationsvorlage zu erzeugen; und

Zuweisen, durch das Rechensystem, einer Rolle an jeden Spieler in der gelernten Formationsvorlage.

2. Nichtflüchtiges computerlesbares Medium, umfassend Anweisungen, die, wenn durch ein Rechensystem (104) ausgeführt, bewirken, dass das Rechensystem das Verfahren nach Anspruch 1 durchführt.

3. Verfahren nach Anspruch 1 oder nichtflüchtiges computerlesbares Medium nach Anspruch 2, ferner umfassend:

Erzeugen, durch das Rechensystem, von ausgerichteten Daten, die eine pro Rahmen geordnete Rollenzuweisung von Spielern umfassen; und

Clustern, durch das Rechensystem, der ausgerichteten Daten, um neue Formationen zu identifizieren.

4. Verfahren nach Anspruch 3 oder nichtflüchtiges computerlesbares Medium nach Anspruch 3, wobei das Clustern einen flachen oder hierarchischen Clustering-Algorithmus umfasst.

5. Verfahren nach Anspruch 1, Anspruch 3 oder Anspruch 4 oder nichtflüchtiges computerlesbares Medium nach Anspruch 2, Anspruch 3 oder Anspruch 4, ferner umfassend:
Filtern, durch das Rechensystem, der Spielerverfolgungsdaten, um Ereignisrahmen entsprechend Rahmen von Verfolgungsdaten, in denen ein Ereignis auftritt, zu identifizieren.

6. Verfahren nach Anspruch 1 oder einem der Ansprüche 3 bis 5 oder nichtflüchtiges computerlesbares Medium nach Anspruch 2 oder einem der Ansprüche 3 bis 5, ferner umfassend:
Normalisieren, durch das Rechensystem, der Spielerverfolgungsdaten, sodass eine Angriffsbahn aller Spieler in den Spielerverfolgungsdaten von links nach rechts auf der Spielfläche ist.

7. Verfahren nach Anspruch 1 oder einem der Ansprüche 3 bis 6 oder nichtflüchtiges computerlesbares Medium nach Anspruch 2 oder einem der Ansprüche 3 bis 6, wobei das Lernen, durch das Rechensystem, der optimalen Formation von Spielerpositionen basierend auf den Spielerverfolgungsdaten unter Verwendung des Gaußschen Mischungsmodells Folgendes umfasst:
Parametrieren einer Verteilung von Spielerpositionen als Mischung aus K Gaußschen, um die optimale Formation zu identifizieren.

8. Verfahren nach Anspruch 1 oder einem der Ansprüche 3 bis 7 oder nichtflüchtiges computerlesbares Medium nach Anspruch 2 oder einem der Ansprüche 3 bis 7, wobei das Lernen, durch das Rechensystem, der optimalen Formation von Spielerpositionen basierend auf den Spielerverfolgungsdaten unter Verwendung des Gaußschen Mischungsmodells Folgendes umfasst:

Überwachen von Eigenwerten während des Lernens, um zu bestimmen, ob ein Eigenwertverhältnis außerhalb eines Bereichs von annehmbaren Werten ist; und

beim Bestimmen, dass das Eigenwertverhältnis außerhalb des Bereichs von annehmbaren Werten ist, Zurücksetzen des Gaußschen Mischungsmodells, bevor das Lernen fortgesetzt wird.

9. System zum Lernen von Spielerverteilung und Rollenzuweisungen aus Spielerverfolgungsdaten, die durch ein Verfolgungssystem (102) erfasst werden, das dazu konfiguriert ist, Bewegung von Spielern auf einer Spielfläche während eines Sportereignisses aufzuzeichnen, wobei das System Folgendes umfasst:

einen Prozessor; und

einen Speicher mit darauf gespeicherten Programmieranweisungen, die, wenn durch den Prozessor ausgeführt, Vorgänge durchführen, umfassend:

Empfangen einer Anforderung von einer Client-Vorrichtung, um die Formation und Rollenzuweisung eines Teams über einen ausgewählten Teilsatz von Spielen zu identifizieren, wobei die Anforderung einen Kontext innerhalb jedes Spiels des Teilsatzes von Spielen definiert;

Abrufen von Spielerverfolgungsdaten für den ausgewählten Teilsatz von Spielen, wobei die Spielerverfolgungsdaten Koordinaten von Spielerpositionen während jedes Spiels umfassen;

Filtern der Spielerverfolgungsdaten, um Rahmen entsprechend dem definierten Kontext zu identifizieren;

Lernen einer optimalen Formation von Spielerpositionen basierend auf den Spielerverfolgungsdaten und dem definierten Kontext unter Verwendung eines Gaußschen Mischungsmodells, um eine gelernte Formationsvorlage zu erzeugen;

Zuweisen einer Rolle an jeden Spieler in der gelernten Formationsvorlage; und

Erzeugen einer graphischen Darstellung einer strukturierten Darstellung der Formation eines Teams über den Teilsatz der Spiele für den definierten Kontext.

10.  System nach Anspruch 9, wobei die Vorgänge ferner Folgendes umfassen:

Erzeugen von ausgerichteten Daten, die eine pro Rahmen geordnete Rollenzuweisung von Spielern umfassen; und

Clustern der ausgerichteten Daten, um neue Formationen zu identifizieren.

11.  System nach Anspruch 10, wobei das Clustern einen flachen oder hierarchischen Clustering-Algorithmus umfasst.

12.  System nach Anspruch 9, Anspruch 10 oder Anspruch 11, wobei der definierte Kontext einer spielinternen Situation entspricht.

13.  System nach Anspruch 9 oder einem der Ansprüche 10 bis 12, wobei das Lernen der optimalen Formation von Spielerpositionen basierend auf den Spielerverfolgungsdaten unter Verwendung des Gaußschen Mischungsmodells Folgendes umfasst:

Parametrieren einer Verteilung von Spielerpositionen als Mischung aus K Gaußschen, um die optimale Formation zu identifizieren.

14.  System nach Anspruch 9 oder einem der Ansprüche 10 bis 13, wobei das Lernen der optimalen Formation von Spielerpositionen basierend auf den Spielerverfolgungsdaten unter Verwendung des Gaußschen Mischungsmodells Folgendes umfasst:

Überwachen von Eigenwerten während des Lernens, um zu bestimmen, ob ein Eigenwertverhältnis außerhalb eines Bereichs von annehmbaren Werten ist; und

beim Bestimmen, dass das Eigenwertverhältnis außerhalb des Bereichs von annehmbaren Werten ist, Zurücksetzen des Gaußschen Mischungsmodells, bevor das Lernen fortgesetzt wird.

**Revendications**

1.  Procédé mis en œuvre par ordinateur d'apprentissage de répartition de joueurs et d'attributions de rôles à partir de données de suivi de joueur capturées par un système de suivi (102) configuré pour enregistrer le mouvement de joueurs sur une surface de jeu pendant un événement sportif, le procédé comprenant :

la récupération, par un système informatique (104), de données de suivi de joueur pour une pluralité de joueurs sur une pluralité d'événements, les données de suivi de joueur comprenant des coordonnées de positions de joueur lors de chaque événement ; **caractérisé par**

l'initialisation, par le système informatique, des données de suivi de joueur sur la base d'une position moyenne de chaque joueur dans la pluralité d'événements ;

l'apprentissage, par le système informatique, d'une formation optimale de positions de joueur sur la base des données de suivi de joueur à l'aide d'un modèle de mélange gaussien ;

l'alignement, par le système informatique, de la formation optimale de positions de joueur sur un patron global en identifiant une distance entre chaque distribution dans la formation optimale et chaque distribution dans le patron global pour générer un patron de formation appris ; et

l'attribution, par le système informatique, d'un rôle à chaque joueur dans le patron de formation appris.

2. Support non transitoire lisible par ordinateur comprenant des instructions qui, lorsqu'elles sont exécutées par un système informatique (104), amènent le système informatique à effectuer le procédé de la revendication 1.

3. Procédé de la revendication 1 ou support non transitoire lisible par ordinateur de la revendication 2, comprenant en outre :

la génération, par le système informatique, de données alignées comprenant une attribution ordonnée par trame de rôles de joueurs ; et

le regroupement, par le système informatique, des données alignées pour identifier de nouvelles formations.

4. Procédé de la revendication 3, ou support non transitoire lisible par ordinateur de la revendication 3, dans lequel le regroupement comprend un algorithme de regroupement plat ou hiérarchique.

5. Procédé de la revendication 1, de la revendication 3 ou de la revendication 4 ou support non transitoire lisible par ordinateur de la revendication 2, de la revendication 3 ou de la revendication 4, comprenant en outre :

le filtrage, par le système informatique, des données de suivi de joueur pour identifier des trames d'événements correspondant à des trames de données de suivi où se produit un événement.

6. Procédé de la revendication 1 ou de l'une quelconque des revendications 3 à 5, ou support non transitoire lisible par ordinateur de la revendication 2 ou de l'une quelconque des revendications 3 à 5, comprenant en outre :

la normalisation, par le système informatique, des données de suivi de joueur afin qu'une trajectoire d'attaque de tous les joueurs dans les données de suivi de joueur se trouve de gauche à droite de la surface de jeu.

7. Procédé de la revendication 1 ou de l'une quelconque des revendications 3 à 6 ou support lisible par ordinateur non transitoire de la revendication 2 ou de l'une quelconque des revendications 3 à 6, dans lequel l'apprentissage, par le système informatique, de la formation optimale de positions de joueur sur la base des données de suivi de joueur à l'aide du modèle de mélange gaussien comprend :

le paramétrage d'une distribution de positions de joueur comme mélange de K gaussiennes pour identifier la formation optimale.

8. Procédé de la revendication 1 ou de l'une quelconque des revendications 3 à 7, ou support non transitoire lisible par ordinateur de la revendication 2 ou de l'une quelconque des revendications 3 à 7, dans lequel l'apprentissage, par le système informatique, de la formation optimale de positions de joueur sur la base des données de suivi de joueur à l'aide du modèle de mélange gaussien comprend :

la surveillance de valeurs propres tout au long de l'apprentissage pour déterminer si un rapport de valeurs propres est en dehors d'une plage de valeurs acceptables ; et

lors de la détermination du fait que le rapport de valeur propre est en dehors de la plage de valeurs acceptables, la réinitialisation du modèle de mélange gaussien avant de poursuivre l'apprentissage.

9. Système d'apprentissage de répartition de joueurs et d'attributions de rôles à partir de données de suivi de joueur capturées par un système de suivi (102) configuré pour enregistrer le mouvement de joueurs sur une surface de jeu pendant un événement sportif, le système comprenant :

un processeur ; et

une mémoire sur laquelle sont stockées des instructions de programmation qui, lorsqu'elles sont exécutées par le processeur, réalisent des opérations comprenant :

la réception d'une demande en provenance d'un dispositif client pour identifier la formation d'une équipe et l'attribution de rôle sur un sous-ensemble sélectionné de matchs, dans lequel la demande définit un contexte au sein de chaque match du sous-ensemble de matchs ;

la récupération de données de suivi de joueur pour le sous-ensemble de matchs sélectionné, les données de suivi de joueur comprenant des coordonnées de positions de joueur lors de chaque match ;

le filtrage des données de suivi de joueur pour identifier des trames correspondant au contexte défini ;

l'apprentissage d'une formation optimale de positions de joueur sur la base des données de suivi de joueur et du contexte défini à l'aide d'un modèle de mélange gaussien pour générer un patron de formation appris ; l'attribution d'un rôle à chaque joueur dans le patron de formation appris ; et la génération d'une représentation graphique d'une représentation structurée de la formation d'une équipe dans le sous-ensemble de matchs pour le contexte défini.

10. Système de la revendication 9, dans lequel les opérations comprennent en outre :

la génération de données alignées comprenant une attribution ordonnée par trame de rôles de joueurs ; et le regroupement des données alignées pour identifier de nouvelles formations.

11. Système de la revendication 10, dans lequel le regroupement comprend un algorithme de regroupement plat ou hiérarchique.

12. Système de la revendication 9, de la revendication 10 ou de la revendication 11, dans lequel le contexte défini correspond à une situation en cours de match.

13. Système de la revendication 9 ou de l'une quelconque des revendications 10 à 12, dans lequel l'apprentissage de la formation optimale de positions de joueur sur la base des données de suivi de joueur à l'aide du modèle de mélange gaussien comprend : le paramétrage d'une distribution de positions de joueur comme mélange de K gaussiennes pour identifier la formation optimale.

14. Système de la revendication 9 ou de l'une quelconque des revendications 10 à 13, dans lequel l'apprentissage de la formation optimale de positions de joueur sur la base des données de suivi de joueur à l'aide du modèle de mélange gaussien comprend :

la surveillance de valeurs propres tout au long de l'apprentissage pour déterminer si un rapport de valeurs propres est en dehors d'une plage de valeurs acceptables ; et lors de la détermination du fait que le rapport de valeur propre est en dehors de la plage de valeurs acceptables, la réinitialisation du modèle de mélange gaussien avant de poursuivre l'apprentissage.

100

Organization Computing System 104

Web Client App Server 114

Pre-Processing Agent 116

Data Store 118

Game Files 122

Prediction Engine 120

Formation Discovery Module 124

Role Assignment Module 126

Template-Clustering Module 128

Tracking System(s) 102

Game File(s) 110

Venue(s) 106

Agents 112

Network 105

Client Device(s) 108

Application 132

EP 4 034 962 B1

FIG. 1

$U = \{U_1, U_2, ..., U_N\}$
RAW, UNORDERED POSITIONS

$G^* = [P'_1, P'_2, ..., P'_K]$
ORDERED PARENT/GLOBAL TEMPLATE

TO
FIG. 2B

$U' = \{U'_1, U'_2, ..., U'_N\}$
TEAM-CENTERED,
UNORDERED POSITIONS

$F^* = [P_1, P_2, ..., P_K]$
OPTIMAL FORMATION
MAXIMIZES THE LIKELIHOOD
OF THE DATA X

TO
FIG. 2B

$$U'^{S \times dN} = \left\{ \begin{bmatrix} x_{11} & y_{11} \\ x_{21} & y_{21} \\ \vdots & \vdots \\ x_{S1} & y_{S1} \end{bmatrix}, \begin{bmatrix} x_{12} & y_{12} \\ x_{22} & y_{22} \\ \vdots & \vdots \\ x_{S2} & y_{S2} \end{bmatrix}, \dots, \begin{bmatrix} x_{1N} & y_{1N} \\ x_{2N} & y_{2N} \\ \vdots & \vdots \\ x_{SN} & y_{SN} \end{bmatrix} \right\}$$

$$\mu_0 = \{\mu_1, \mu_2, ..., \mu_N\}$$

$$U'^{SN \times d}_{flat} = \begin{bmatrix} x_{11} & y_{11} \\ x_{12} & y_{12} \\ \vdots & \vdots \\ x_{1K} & y_{1K} \\ x_{21} & y_{21} \\ \vdots & \vdots \\ x_{SK} & y_{SK} \end{bmatrix}$$

FROM FIG. 2B

FIG. 2A

FROM
FIG. 2A

FROM
FIG. 2A

$T^* = [P_1, P_2, ..., P_K]$

LEARNED TEMPLATE OF
ORDERED DISTRIBUTIONS

210

$$M = \begin{bmatrix} 0 & 0 & 1 & 0 & 0 & 0 & 0 & 0 & 0 & 0 & 0 \\ 0 & 0 & 0 & 0 & 0 & 0 & 0 & 0 & 1 & 0 & 0 \\ 0 & 0 & 0 & 0 & 0 & 0 & 0 & 0 & 0 & 1 & 0 \\ 1 & 0 & 0 & 0 & 0 & 0 & 0 & 0 & 0 & 0 & 0 \\ 0 & 0 & 0 & 1 & 0 & 0 & 0 & 0 & 0 & 0 & 0 \\ 0 & 0 & 0 & 0 & 0 & 0 & 0 & 0 & 0 & 0 & 1 \\ 0 & 0 & 0 & 0 & 0 & 1 & 0 & 0 & 0 & 0 & 0 \\ 0 & 0 & 0 & 0 & 0 & 0 & 1 & 0 & 0 & 0 & 0 \\ 0 & 1 & 0 & 0 & 0 & 0 & 0 & 0 & 0 & 0 & 0 \\ 0 & 0 & 0 & 0 & 0 & 0 & 0 & 1 & 0 & 0 & 0 \end{bmatrix}$$

212

$R = [R_1, R_2, ..., R_K]$

PER-FRAME ORDERED ROLE-
ASSIGNMENT OF PLAYERS

$$R^{S \times dK} = \begin{bmatrix} x_{11} & y_{11} & x_{12} & y_{12} & \cdots & x_{1K} & y_{1K} \\ x_{21} & y_{21} & x_{22} & y_{22} & \cdots & x_{2K} & y_{2K} \\ \vdots & \vdots & \vdots & \vdots & & \vdots & \vdots \\ x_{S1} & y_{S1} & x_{S2} & y_{S2} & \cdots & x_{SK} & y_{SK} \end{bmatrix}$$

214

TO FIG. 2A

FIG. 2B

300

```
                    ┌─────────────┐
                    │    Start    │
                    └─────────────┘
                           │
                           ▼
┌────────────────────────────────────────────────────┐
│     Learn a global template across a season of sports│ ～ 302
└────────────────────────────────────────────────────┘
                           │
                           ▼
┌────────────────────────────────────────────────────┐
│     Retrieve trajectory data for a team across a season│ ～ 304
└────────────────────────────────────────────────────┘
                           │
                           ▼
┌────────────────────────────────────────────────────┐
│              Normalize the trajectory data          │ ～ 306
└────────────────────────────────────────────────────┘
                           │
                           ▼
┌────────────────────────────────────────────────────┐
│           Initialize the normalized trajectory data │ ～ 308
└────────────────────────────────────────────────────┘
                           │
                           ▼
┌────────────────────────────────────────────────────┐
│  Discover a formation of the team in every half of every game│ ～ 310
└────────────────────────────────────────────────────┘
                           │
                           ▼
┌────────────────────────────────────────────────────┐
│  Assign roles to each player based on the discovered formation│ ～ 312
└────────────────────────────────────────────────────┘
                           │
                           ▼
┌────────────────────────────────────────────────────┐
│  Output graphical representation of a structured representation│ ～ 314
│                    across games                     │
└────────────────────────────────────────────────────┘
                           │
                           ▼
                    ┌─────────────┐
                    │     End     │
                    └─────────────┘
```

FIG. 3A

350

```
         ┌─────────────┐
         │    Start    │
         └──────┬──────┘
                │
                ▼
┌──────────────────────────────────────────────────┐
│ Receive a request from client device to analyze   │── 352
│ a subset of games                                 │
└──────────────────────┬───────────────────────────┘
                       ▼
┌──────────────────────────────────────────────────┐
│  Receive parameters associated with the subset    │── 354
│                  of games                          │
└──────────────────────┬───────────────────────────┘
                       ▼
┌──────────────────────────────────────────────────┐
│   Identify trajectory data for the subset of games│── 356
└──────────────────────┬───────────────────────────┘
                       ▼
┌──────────────────────────────────────────────────┐
│ Identify all frames of trajectory data that       │── 358
│ matches the parameters                            │
└──────────────────────┬───────────────────────────┘
                       ▼
┌──────────────────────────────────────────────────┐
│  Discover a formation of the team in each of the  │── 360
│                    frames                          │
└──────────────────────┬───────────────────────────┘
                       ▼
┌──────────────────────────────────────────────────┐
│     Map each player position to a role distribution│── 362
└──────────────────────┬───────────────────────────┘
                       ▼
┌──────────────────────────────────────────────────┐
│ Generate a graphical representation of the team's │── 364
│ formation across the subset of games              │
└──────────────────────┬───────────────────────────┘
                       ▼
         ┌─────────────┐
         │     End     │
         └─────────────┘
```

FIG. 3B

402

FIG. 4A1

FIG. 4A2

FIG. 4B

FIG. 5A

500

Storage
Device ~ 530

Serv. 1 ~ 532

Serv. 2 ~ 534

Serv. 3 ~ 536

Memory 515

520

ROM

525

RAM

545 ~ Input Device

535 ~ Input Device

505

540 ~ Communication Interface

512 ~ Cache ⟷ Processor ~ 510

EP 4 034 962 B1

FIG. 5B

550

585 ~ User Interface Components

555 ~ Processor

560

590

580 ~ Bridge ⟷ Chipset ⟷ Communication Interface

565 ~ Output

570 ~ Storage Device

575 ~ RAM

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62907133

**Non-patent literature cited in the description**

- **XINYU (FELIX) WEI**. Modelling and Predicting Adversarial Behaviour using Large Amounts of Spatiotemporal Data. *Ph.D. thesis, Queensland University of Technology*, 2016, https://eprints.qut.edu.au/101959/1/ Xinyu_Wei_Thesis.pdf